# EUROPÄISCHE PATENTSCHRIFT

(11) **EP 0 526 465 B1**
(45) Veröffentlichungstag und Bekanntmachung des Hinweises auf die Patenterteilung: **12.10.1994**
(21) Anmeldenummer: 91905445.2
(22) Anmeldetag: 09.03.1991
(51) Int. Cl.: H04J 3/07

(54) **STOPFVERFAHREN ZU REDUKTION DES WARTEZEITJITTERS UND ANORDNUNG ZUR DURCHFÜHRUNG DES VERFAHRENS**
STUFFING PROCESS AND DEVICE FOR REDUCING WAITING TIME JITTER
PROCEDE ET DISPOSITIF DE BOURRAGE SERVANT A REDUIRE L'INSTABILITE DU TEMPS D'ATTENTE

(30) Priorität: 26.04.1990 DE 4013317
(43) Veröffentlichungstag der Anmeldung: 10.02.1993
(73) Patentinhaber: ANT Nachrichtentechnik GmbH, D-71522 Backnang (DE)
(72) Erfinder: EHRLICH, Wolfgang, D-7151 Allmersbach im Tal (DE)
(86) Internationale Anmeldenummer: DE9100205
(87) Internationale Veröffentlichungsnummer: WO9116774

(56) Entgegenhaltungen:
- Nachrichtentechnische Zeitschrift, Band 29, Nr. 4, April 1976, (Berlin, DE); B. Müller: "Messung der Langzeit-Phasenschwankungen in Stuffing-Multiplexsystemen für PCM- und Datensignale", Seiten 307-313
- IEEE Proceedings Global Telecommunication Conference, Tokyo, 15. - 18. November 1987, Band 1, IEEE; W.D. Grover et al.: "Waiting time jitter reduction by synchronizer stuff threshold modulation", Seiten 514-518

## Beschreibung

Die Erfindung betrifft ein Stopfverfahren zur Reduktion von Wartezeitjitter gemäß dem Oberbegriff des Patentanspruches 1 und eine Anordnung zur Durchführung des Verfahrens gemäß dem Oberbegriff des Patentanspruches 4.

Soll ein erstes asynchrones Digitalsignal in ein zweites Digitalsignal eingefügt werden, so stellt sich das grundsätzliche Problem der Frequenzanpassung. Dieses Problem wird durch Stopfen gelöst. Ein Problem der üblichen Stopfverfahren ist, daß das durch Entstopfen zurückgewonnene erste Digitalsignal mit einem niederfrequenten Jitter, dem Wartezeitjitter, der nicht mehr entfernt werden kann, behaftet sein kann. Die Größe dieses Jitters ergibt sich aus dem verwendeten Stopfverfahren.

Aus Duttweiler D.L., "Waiting Time Jitter", The BELL System Technical Journal, Vol. 51, No. 1, 1972, Seiten 165 bis 207 ist das übliche Verfahren zum Positiv-Stopfen und die Größe des dabei entstehenden Wartezeitjitters bekannt. Der Wartezeitjitter beim Positiv-Null-Negativ-Stopfen wird im Artikel von Kühne F., Lang K., "Positiv-Null-Negativ-Stopftechnik für Multiplexübertragung plesiochroner Datensignale", Frequenz, Band 32, Nr. 10, 1978, Seiten 281 bis 287 behandelt.

Aus dieser Schrift ist es bekannt, ein erstes Digitalsignal mit einer ersten Bitrate einem Synchronisierer zuzuführen und dort mit einem ersten Takt, der der Bitrate des ersten Digitalsignals entspricht, in einen elastischen Speicher einzuschreiben. Aus dem elastischen Speicher wird mit einem zweiten Takt ein zweites Digitalsignal ausgelesen, wobei der zweite Takt der Bitrate des zweiten Digitalsignals entspricht. In Zählern wird der Rahmen des zweiten Digitalsignals erzeugt und die Leseaktivierung des elastischen Speichers gesteuert. Der mittlere Füllstand des elastischen Speichers wird einmal pro Rahmen des zweiten Digitalsignals ermittelt. Eine Differenz zwischen dem mittleren Füllstand und dem Soll-Wert für den mittleren Füllstand wird für jeden Stopfrahmen des zweiten Digitalsignals gebildet. Es ist bekannt die Differenz mit einer Maximalabweichung zu vergleichen. Ist die Differenz größer als die Maximalabweichung, so wird gestopft.

In CHOI D., "Waiting Time Jitter Reduction", IEEE Transactions on Communications, Vol. 37, No. 11, 1989, Seiten 1231 bis 1236 wird ein Verfahren zur Reduktion des Wartezeitjitters beim Positiv-Null-Negativ-Stopfen beschrieben. Der Autor geht davon aus, daß ein nominelles Stopfverfahren von Null, wie es beim Positiv-Negativ-Stopfen der Fall ist, einen großen Wartezeitjitter ergibt. Das vorgestellte Verfahren bildet daher ein Stopfverhältnis ungleich Null nach und erzielt so eine Reduktion des Wartezeitjitters

In der Veröffentlichung von Grover W. D., Moore T. E., McEachern J. A. "Waiting Time Jitter Reduction by Synchronizer Stuff Threshold Modulation", GLOBECOM, 87, Seiten 514 bis 518 werden zur Reduktion des Wartezeitjitters zusätzliche Stopfvorgänge im Synchronisierer vorgesehen, wobei diese zusätzlichen Stopfvorgänge in einer solchen Sequenz erfolgen, daß der Effekt eine Frequenzverschiebung des Jitters ist. Zur Anwendung dieses Verfahrens ist es nur notwendig, im Synchronisierer eine neue Steuerung dafür vorzusehen, wann gestopft werden soll. Während bisher immer dann gestopft wurde, wenn konstante Schwellen über- oder unterschritten waren, werden im vorliegenden Fall die Schwellen moduliert.

Diese gattungsbildende Schrift geht also von einem Verfahren aus, das dem aus dem Artikel von Kühne und Lang entspricht. Das Verfahren arbeitet jedoch nicht mit festen Schwellen, sondern die Schwellen werden moduliert.

Die in diesen Aufsätzen beschriebenen Verfahren zur Reduktion des Wartezeitjitters haben jeweils einen freien Parameter, mit dem der Wartezeitjitter festgelegt wird (z.B. die periodendauer im Fall der Schwellenmodulation). Es ist jedoch nicht zulässig, diesen Parameter so zu wählen, daß sich ein möglichst kleiner Wartezeitjitter ergibt. Vielmehr ist Rücksicht zu nehmen auf die Grenzfrequenz der PLL-Schaltung des Desynchronisierers. Je größer diese Grenzfrequenz ist, desto mehr Wartezeitjitter muß durch Wahl des freien Parameters zugelassen werden. Wird dies nicht beachtet, so überlagert eine zusätzliche Jitterkomponente den vom Desynchronisierer erzeugten Takt, wobei diese größer als der Wartezeitjitter ist.

Aufgrund des freien Parameters ergibt sich die Notwendigkeit, den Synchronisierer und den Desynchronisierer konstruktiv aufeinander abzustimmen. Ist die Grenzfrequenz der PLL-Schaltung im Desynchronisierer größer als erwartet, so ergibt sich ein erhöhter Jitter des zurückgewonnenen Taktes. Ist die Grenzfrequenz der PLL-Schaltung dagegen kleiner als erwartet, so verringert sich dieser Jitter nur unwesentlich, da dann der Wartezeitjitter dominiert.

Der Erfindung liegt die Aufgabe zurgrunde, ein Verfahren anzugeben, mit dem der Wartezeitjitter beim Einsatz beliebiger üblicher Desynchronisierer reduziert werden kann und eine Anordnung zur Durchführung des Verfahrens anzugeben.

Die Aufgabe wird bezüglich des Verfahrens mit den Merkmalen des Patentanspruches 1 gelöst. Vorteilhafte Weiterbildungen des Patentanspruches 1 sind in den Unteransprüchen angegeben. Bezüglich der Anordnung wird die Aufgabe mit den Merkmalen des Patentanspruches 4 gelöst.

Beim erfindungsgemäßen Stopfverfahren wird ein erstes Digitalsignal derart in ein zweites Digitalsignal eingefügt, daß das erste Digitalsignal beliebig jitterarm zurückgewonnen werden kann. Ein weiterer Vorteil ist, daß für das zweite Digitalsignal standardisierte Rahmen verwendet werden können. Erfindungsgemäß ist zum Entstopfen ein übliches Verfahren und somit ein üblicher Desynchronisierer anwendbar. Die genannten Eigenschaften des Stopfverfahrens werden durch Verformung des Spektrums des Stopfjitters erreicht. Dabei soll der Anteil bei tiefen Frequenzen des Stopfjitters gering sein, da diese Anteile durch die in den Desynchronisierern enthaltenen PLL-Anordnungen nicht herausgefiltert werden können.

Um mit dem erfindungsgemäßen Stopfverfahren zu erreichen, daß das erste Digitalsignal beliebig jitterarm zurückgewonnen werden kann, ist es notwendig, beim Stopfen den Füllstand des elastischen Speichers möglichst genau ermitteln zu können.

Eine Möglichkeit, den Füllstand möglichst genau zu ermitteln, ist in einem der Ausführungsbeispiele angegeben.

Das erfindungsgemäße Stopfverfahren zeichnet sich durch folgende Merkmale aus: In jedem Stopfrahmen des zweiten Digitalsignals werden folgende Verfahrensschritte durchgeführt:
Der mittlere Füllstand des elastischen Speichers wird möglichst genau ermittelt. Eine Differenz zwischen dem IST-Wert und dem SOLL-Wert des mittleren Füllstandes des elastischen Speichers wird ermittelt. Diese Differenz gibt den Füllstandsfehler an. Der Füllstandsfehler wird aufsummiert, es wird also eine Fehlersumme gebildet. Die Entscheidung, wie und ob gestopft werden soll, erfolgt unter dem Gesichtspunkt, die Fehlersumme möglichst konstant zu halten.

Im folgenden wird begründet, warum es wichtig ist, die Fehlersumme möglichst konstant zu halten. Bei der Zurückgewinnung des ursprünglichen Digitalsignals liegt der zugehörige Takt in einer stark verjitterten Form vor. Es ist üblich, die hochfrequenten Anteile dieses Jitters, beispielsweise mit einer PLL-Schaltung, für die Stopfrahmen des zweiten Digitalsignals B im Desynchronisierer herauszufiltern. Die Übertragungsfunktion des Filters kann näherungsweise mit der eines Integrators verglichen werden, wobei der Integrator das Integral des Füllstandsfehler bildet. Da die Fehlersumme ebenfalls als Näherung für das Integral des Füllstandfehlers aufzufassen ist, existiert näherungsweise ein proportionaler Zusammenhang zwischen dem Zeitverlauf der Fehlersumme und dem Zeitverlauf des Jitters des gefilterten Taktes des zurückgewonnenen ursprünglichen Digitalsignals.

In die Proportionalitätskonstante geht die Grenzfrequenz des Filters und die reziproke Stopfrahmenfrequenz des zweiten Digitalsignals B ein. Eine möglichst konstante Fehlersumme bedingt also eine zeitlich unveränderten Phase, eine Verringerung der Grenzfrequenz des Filters führt zu einer Verringerung des Jitters.

Anhand der Zeichnungen werden Ausführungsbeispiele der Erfindung erläutert. Es zeigen:
- Fig. 1: einen Synchronisierer zum Positiv-Stopfen und
- Fig. 2: einen Synchronisierer zum Positiv-Null-Negativ-Stopfen

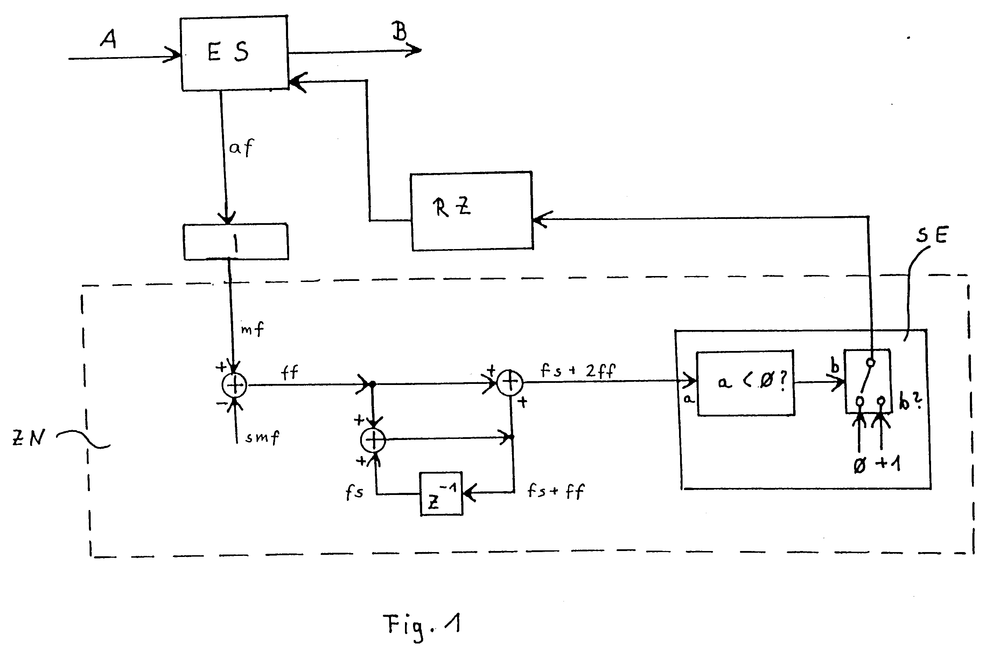

Fig. 1 zeigt eine Schaltung, die beim Positiv-Stopfen Stopfentscheidungen so trifft, daß die Fehlersumme möglichst konstant bleibt. Ein erstes Digitalsignal A mit einer ersten Bitrate, die einem ersten Takt t_{A} entspricht, wird dem Synchronisierer zugeführt. Das Ausgangssignal des Synchronisierers ist ein zweites Digitalsignal B mit einer zweiten Bitrate, die einem zweiten Takt t_{B} entspricht. Dieses zweite Digitalsignal B wird zu einem Desynchronisierer übertragen (in der Figur nicht dargestellt), in dem wiederum das erste Digitalsignal A mit der ersten Bitrate regeneriert wird. Die Bitraten der Digitalsignale A und B sind so gewählt, daß eine Übertragung des ersten Digitalsignals A im zweiten Digitalsignal B mittels Impulsstopftechnik ermöglicht wird. Der Synchronisierer weist einen elastischen Speicher ES auf, dem das erste Digitalsignal A zugeführt wird. Es wird mit dem Takt t_{A} eingeschrieben. Aus dem elastischen Speicher ES wird das zweite Digitalsignal B mit dem zweiten Takt t_{B} ausgelesen. Ein Rahmenzähler RZ ist vorgesehen, der den Rahmen des zweiten Digitalsignals erzeugt und die Leseaktivierung des elastischen Speichers ES steuert. Der elastische Speicher ES gibt mit dem aktuellen Füllstand af an, wieviel Bits sich momentan im Speicher befinden. Beim Schreiben eines Bits in den elastischen Speicher ES erhöht sich der aktuelle Füllstand af um 1 bit, beim Lesen eines Bits verringert sich der aktuelle Füllstand af um 1 bit. Der Integrator I bildet aus dem aktuellen Füllstand af den mittleren Füllstand mf. Der mittlere Füllstand mf ist das Integral des aktuellen Füllstandes af über ein vorgegebenes Zeitfenster. Für jeden Rahmen des Digitalsignals B liefert der Integrator I einen neuen Wert für den mittleren Füllstand mf. Der mittlere Füllstand des elastischen Speichers ES wird einem zeitdiskreten Netzwerk ZN, das mit der Stopfrahmenfrequenz des zweiten Digitalsignals B getaktet ist, zugeführt. In diesem zeitdiskreten Netzwerk ZN wird zunächst der mittlere Füllstand mf mit dem SOLL-Wert des mittleren Füllstands smf verglichen. Der Füllstandsfehler ff wird also ermittelt. Die Summe der Füllstandsfehler ff aller bisherigen Stopfrahmen, die bisherige Fehlersumme fs liegt vor. Im zeitdiskreten Netzwerk ZN wird aus dem Füllstandsfehler ff und der bisherigen Fehlersumme fs die Fehlersumme des momentanen Stopfrahmens des Digitalsignals B gebildet, ff + fs. Aus dieser Fehlersumme des momentanen Stopfrahmens des Digitalsignals B und dem Füllstandsfehler des momentanen Stopfrahmens des Digitalsignals B wird ein Schätzwert für die Fehlersumme im nächsten Stopfrahmen des Digitalsignals B gebildet, fs + 2ff. Der Schätzwert für die nächste Fehlersumme fs + 2ff wird einer Schaltung zur Stopfentscheidung SE zugeführt. In dieser Schaltung SE wird entschieden, ob gestopft wird. Liegt der Schätzwert für die Fehlersumme im nächsten Rahmen oberhalb einer Schwelle, so wird nicht gestopft. Liegt er jedoch unterhalb dieser Schwelle, so wird positiv gestopft. Die Information, ob gestopft wird, wird von der Schaltung zur Stopfentscheidung SE zum Rahmenzähler RZ geleitet.

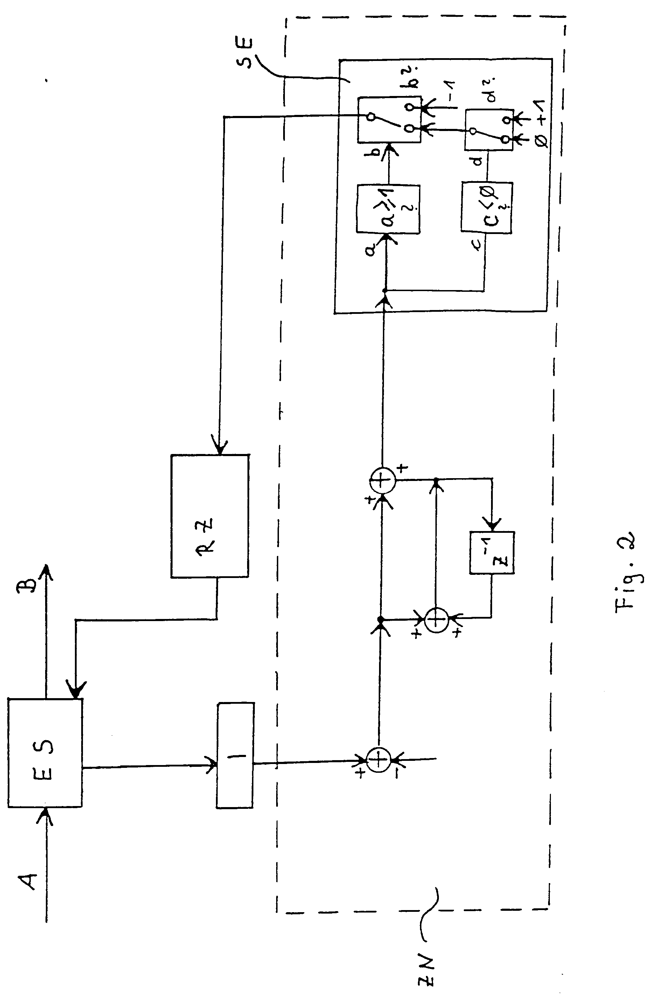

In Figur 2 ist ein Synchronisierer zum Positiv-Null-Negativ-Stopfen dargestellt. Er unterscheidet sich vom Synchronisierer zum Positiv-Stopfen durch den Aufbau der Schaltung zur Stopfentscheidung SE. In dieser Schaltung wird beim Positiv-Null-Negativ-Stopfen die Stopfentscheidung ebenfalls so getroffen, daß die Fehlersumme möglichst konstant bleibt. Die Entscheidung erfolgt mit Hilfe eines Schwellenpaares, dessen Schwellen einen Abstand von 1 bit haben. Wenn der Schätzwert für die Fehlersumme im nächsten Stopfrahmen des Digitalsignals B innerhalb eines Schwellenpaares liegt, so wird nicht gestopft. Liegt der Wert jedoch außerhalb des Schwellenpaares, so wird entweder positiv oder negativ gestopft in Abhängigkeit von der Abweichung des Schätzwertes vom Schwellenpaar.

Zur Bildung des Schätzwertes für die Fehlersumme des nächsten Stopfrahmens des Digitalsignals B wird jeweils von einem Stopfverhältnis von 0 ausgegangen.

## Patentansprüche

1. Stopfverfahren zur Reduktion des Wartezeitjitters mit den folgenden Merkmalen:
a) Ein erstes Digitalsignal (A) mit einer ersten Bitrate wird einem Synchronisierer zugeführt und im Synchronisierer mit einem ersten Takt (t_{A}), der der Bitrate des ersten Digitalsignals (A) entspricht, in einen elastischen Speicher (ES) eingeschrieben;
b) aus dem elastischen Speicher (ES) wird ein zweites Digitalsignal (B) mit einem zweiten Takt (t_{B}), der der Bitrate des zweiten Digitalsignals (B) entspricht, ausgelesen;
c) in einem Rahmenzähler (RZ) wird der Rahmen des zweiten Digitalsignals (B) erzeugt, die Leseaktivierung des elastischen Speichers (ES) gesteuert und das Stopfen in Abhängigkeit von einem zugeleiteten Wert ausgeführt;
gekennzeichnet durch die folgenden Merkmale:
d) der mittlere Füllstand des elastischen Speichers (ES) wird einmal pro Stopfrahmen des zweiten Digitalsignals (B) ermittelt;
e) eine Differenz zwischen dem mittleren Füllstand und dem Sollwert für den mittleren Füllstand wird für jeden Stopfrahmen des Digitalsignals (B) gebildet;
f) aus den Differenzen des momentanen Stopfrahmens und aller bisherigen Stopfrahmen wird eine Summe ermittelt und es wird ein Wert, der angibt, ob und wie gestopft wird, derart ermittelt, daß diese Summe möglichst konstant bleibt;
g) aus der Differenz des momentanen Stopfrahmens und der Summe wird ein Schätzwert für die Summe im nächsten Stopfrahmen des Digitalsignals (B) unter der Annahme, daß nicht gestopft wird, gebildet;
h) der Schätzwert wird mit mindestens einer Schwelle verglichen und der Wert, der angibt, ob und wie gestopft wird, wird in Abhängigkeit von diesem Vergleich ermittelt;
i) der ermittelte Wert wird dem Rahmenzähler (RZ) zugeleitet.

2. Stopfverfahren nach Anspruch 1, dadurch gekennzeichnet, daß beim positiv-Stopfen der Schätzwert mit einer Schwelle verglichen wird und immer dann gestopft wird, wenn der Schätzwert unterhalb der Schwelle liegt und dann nicht gestopft wird, wenn der Schätzwert oberhalb der Schwelle liegt.

3. Stopfverfahren nach Anspruch 1, dadurch gekennzeichnet, daß beim positiv-Null-Negativ-Stopfen der Schätzwert für die Fehlersumme im nächsten Stopfrahmen des zweiten Digitalsignals (B) mit einem Schwellenpaar verglichen wird, und daß gestopft wird, wenn der Schätzwert außerhalb des Schwellenpaares liegt, und daß nicht gestopft wird, wenn er innerhalb des Schwellenpaares liegt.

4. Anordnung zur Durchführung des Verfahrens nach Anspruch 1 mit den folgenden Merkmalen:
a) ein elastischer Speicher (ES) ist vorgesehen, in den ein erstes Digitalsignal (A) mit einem ersten Takt (tA), der der Bitrate des ersten Digitalsignals (A) entspricht, geschrieben wird, und aus dem ein zweites Digitalsignal (B) mit einem zweiten Takt (tB) der Bitrate des zweiten Digitalsignals (B) entspricht, ausgelesen wird;
b) ein Rahmenzähler (RZ) ist vorgesehen, der den Rahmen des zweiten Digitalsignals (B) erzeugt, die Leseaktivierung des elastischen Speichers (ES) steuert und in Abhängigkeit von einem zugeleiteten Wert das Stopfen ausführt;
gekennzeichnet durch die folgenden Merkmale:
c) eine Schaltung zur Ermittlung des mittleren Füllstandes (I) des elastischen Speichers (ES), die den mittleren Füllstand mindestens einmal pro Stopfrahmen des zweiten Digitalsignals (B) ermittelt, ist vorgesehen;
d) ein zeitdiskretes Netzwerk (ZN), das mit der Stopfrahmenfrequenz des zweiten Digitalsignals (B) getaktet wird und dem der mittlere Füllstand zugeführt wird, ist vorgesehen, wobei das zeitdiskrete Netzwerk (ZN) derart ausgestaltet ist, daß es einen Wert ermittelt, der angibt, ob und wie gestopft wird, derart, daß die Summe aus den Differenzen zwischen dem mittleren Füllstand und einem Sollwert für den mittleren Füllstand über alle Stopfrahmen des zweiten Digitalsignals (B) - eine solche Differenz wird für jeden Stopfrahmen des Digitalsignals (B) gebildet - möglichst konstant bleibt, und wobei das zeitdiskrete Netzwerk (ZN) derart ausgestaltet ist, daß es aus der Differenz des momentanen Stopfrahmens und der Summe einen Schätzwert für die Summe im nächsten Stopfrahmen des Digitalsignals (B) ermittelt, unter der Annahme, daß nicht gestopft wird;
e) es ist eine Schaltung zur Stopfentscheidung (SE) vorgesehen, der der Schätzwert zugeführt wird, wobei die Schaltung zur Stopfentscheidung (SE) derart ausgestaltet ist, daß sie den Schätzwert mit mindestens einer Schwelle vergleicht und in Abhängigkeit von diesem Vergleich den Wert ermittelt, der angibt ob und wie gestopft wird, wobei der Wert dem Rahmenzähler (RZ) zugeführt wird.

## Claims

1. Stuffing process for the reduction of the waiting time jitter with the following features:
a) A first digital signal (A) of a first bit rate is fed to a synchroniser and written into an elastic storage device (ES) at a first rate (t_{A}), which corresponds to the bit rate of the first digital signal (A), in the synchroniser,
b) a second digital signal (B) is read out of the elastic storage device (ES) at a second rate (t_{B}), which corresponds to the bit rate of the second digital signal (B) and
c) the frame of the second digital signal (B) is produced, the reading activation of the elastic storage device (ES) is controlled and the stuffing is carried out in dependence on a supplied value in a frame counter (RZ),
characterised by the following features:
d) the mean filling state of the elastic storage device (ES) is ascertained once for each stuffing frame of the second digital signal (B),
e) a difference between the mean filling state and the target value for the mean filling state is formed for each stuffing frame of the second digital signal (B),
f) a sum of the differences of the momentary stuffing frame and all previous stuffing frames is ascertained and a value, which indicates whether and how stuffing is done, is determined in such a manner that this sum remains as constant as possible,
g) from the difference of the momentary stuffing frame and the sum, an estimated value for the sum in the next stuffing frame of the digital signal (B) is formed on the assumption that no stuffing is done,
h) the estimated value is compared with at least one threshold and the value, which indicates whether and how stuffing is done, is determined in dependence on this comparison and
i) the ascertained value is supplied to the frame counter (RZ).

2. Stuffing process according to claim 1, characterised thereby, that in the case of positive stuffing, the estimated value is compared with a threshold and stuffing is done whenever the estimate values lies below the threshold and stuffing is not done whenever the estimated value lies above the threshold.

3. Stuffing process according to claim 1, characterised thereby, that in the case of positive-zero-negative stuffing, the estimated value for the error sum in the next stuffing frame of the second digital signal (B) is compared with a threshold pair and stuffing is done whenever the estimated value lies outside the threshold pair and stuffing is not done whenever the estimated value lies within the threshold pair.

4. Arrangement for the performance of the process according to claim 1 with the following features:
a) an elastic storage device (ES) is provided, into which a first digital signal (A) is written at a first rate (t_{A}), which corresponds to the bit rate of the first digital signal (A) and out of which a second digital signal (B) is read out at a second rate (t_{B}), which corresponds to the bit rate of the second digital signal (B),
b) a frame counter (RZ) is provided, which produces the frame of the second digital signal (B), controls the reading activation of the elastic storage device (ES) and carries out the stuffing in dependence on a supplied value,
characterised by the following features:
c) a circuit is provided for the ascertaining of the mean filling state (I) of the elastic storage device (ES), which ascertains the mean filling state once for each stuffing frame of the second digital signal (B);
d) a time-discrete network (ZN) is provided, which is pulsed at the stuffing frame frequency of the second digital signal (B) and to which the mean filling state is supplied, wherein the time-discrete network (ZN) is structured in such a manner that it ascertains a value, which indicates whether and how stuffing is done, in such a manner that the sum of the differences between the mean filling state and a target value for the mean filling state remains as constant as possible over all stuffing frames of the second digital signal (B), such a difference being formed for each stuffing frame of the second digital signal (B), and wherein the time-discrete network (ZN) is structured in such a manner that, from the difference of the momentary stuffing frame and the sum, it ascertains an estimated value for the sum in the next stuffing frame of the digital signal (B) on the assumption that no stuffing is done,
e) a circuit is provided for the stuffing decision (SE), to which circuit the estimated value is supplied, wherein the circuit for the stuffing decision (SE) is structured in such a manner that it compares the estimated value with at least one threshold and in dependence on this comparison determines the value which indicates whether and how stuffing is done, wherein the value is fed to the frame counter (RZ).

## Revendications

1. Procédé de justification servant à réduire la gigue du temps d'attente, ayant les particularités suivantes:
a) un premier signal numérique (A), ayant un premier débit binaire, est envoyé à un synchroniseur et inscrit dans une mémoire tampon (ES) de ce synchroniseur à un premier rythme (t_{A}) correspondant au débit binaire du premier signal numérique (A);
b) de la mémoire tampon (ES) est extrait un deuxième signal numérique (B) ayant un second rythme (t_{B}) correspondant au débit binaire du deuxième signal numérique (B); et
c) dans un compteur de trames (RZ) s'effectuent la génération de la trame du deuxième signal numérique (B), l'activation pour la lecture de la mémoire tampon (ES) et la justification en fonction d'une valeur appliquée à ce compteur;
caractérisé en ce que:
d) le niveau de remplissage moyen de la mémoire tampon (ES) est établi une fois par trame de justification du deuxième signal numérique (B);
e) une différence entre le niveau de remplissage moyen et la valeur de consigne pour le niveau de remplissage moyen est formée pour chaque trame de justification du signal numérique (B);
f) à partir des différences de la trame de justification instantanée et de toutes les trames de justification passées jusqu'à ce moment, est établie une somme, et une valeur, indiquant si et de quelle façon est opérée une justification, est déterminée de manière que cette somme reste aussi constante que possible,
g) à partir de la différence de la trame de justification instantanée et de la somme, est formée une estimation pour la somme dans la trame de justification suivante du signal numérique (B), sous la supposition qu'il n'y ait pas de justification;
h) la valeur estimée est comparée avec au moins un seuil et la valeur indiquant si et de quelle façon est opérée une justification, est déterminée en fonction de cette comparaison; et
i) la valeur déterminée est envoyée au compteur de trames (RZ).

2. Procédé de justification selon la revendication 1, caractérisé en ce que, dans la justification positive, la valeur estimée est comparée à un seuil et une justification est effectuée toujours au cas où la valeur estimée est inférieure au seuil, tandis qu'une justification n'est pas effectuée au cas où la valeur estimée est supérieure au seuil.

3. Procédé de justification selon la revendication 1, caractérisé en ce que, dans la justification positive-nulle-négative, la valeur estimée pour la somme d'erreurs (erreur cumulée) dans la trame de justification suivante du deuxième signal numérique (B), est comparée à une paire de seuils, qu'une justification est effectuée au cas où la valeur estimée est en dehors de la paire de seuils et qu'il n'y a pas de justification lorsque la valeur estimée est comprise à l'intérieur de la paire de seuils.

4. Dispositif pour la mise en oeuvre du procédé selon la revendication 1, ayant les particularités suivantes:
a) il comprend une mémoire tampon (ES) dans lequel est inscrit un premier signal numérique (A), ayant un premier rythme (tA) correspondant au débit binaire du premier signal numérique (A), et à partir de laquelle est extrait un deuxième signal numérique (B), ayant un second rythme (tB) correspondant au débit binaire du deuxième signal numérique (B); et
b) il comprend un compteur de trames (RZ) qui génère la trame du deuxième signal numérique (B), commande l'activation pour la lecture de la mémoire tampon (ES) et effectue la justification en fonction d'une valeur appliquée;
caractérisé en ce qu'il comprend en plus
c) un circuit (I) pour établir le niveau de remplissage moyen de la mémoire tampon (ES), qui établit le niveau de remplissage moyen au moins une fois par trame de justification du deuxième signal numérique (B);
d) un réseau (ZN) de nature discrète dans le temps, qui est rythmé à la fréquence de trame de justification du deuxième signal numérique (B) et auquel est appliqué le niveau de remplissahe moyen, le réseau (ZN) étant réalisé de manière qu'il établisse une valeur indiquant si et de quelle façon une justification est opérée, de manière que la somme des différences entre le niveau de remplissage moyen et une valeur de consigne pour le niveau de remplissage moyen sur toutes les trames de justification du deuxième signal numérique (B) - une telle différence est formée pour chaque trame de justification du signal numérique (B) - reste aussi constante que possible, et le réseau (ZN) étant réalisé de manière qu'à partir de la différence entre la trame de justification instantanée et la somme, il détermine une estimation pour la somme dans la trame de justification suivante du signal numérique (B), sous la supposition qu'il n'y ait pas de justification; et
e) un circuit (SE) destiné à prendre des décisions de justification, auquel est appliquée l'estimation, ce circuit de décision (SE) étant réalisé de manière qu'il compare l'estimation à au moins un seuil et que, en fonction du résultat de cette comparaison, il établisse la valeur indiquant si et de quelle façon est opérée une justification, valeur qui est appliquée au compteur de trames (RZ).
